# EUROPÄISCHE PATENTSCHRIFT

(11) **EP 0 448 140 B1**
(45) Veröffentlichungstag und Bekanntmachung des Hinweises auf die Patenterteilung: **08.12.1993**
(21) Anmeldenummer: 91200353.0
(22) Anmeldetag: 19.02.1991
(51) Int. Cl.: A01K 5/00, B01F 15/00, B01F 7/00

(54) **Vorrichtung zum Mischen und dosierten Entladen von Viehfutter oder dergleichen**
Device for the mixing and measured delivery of animal fodder or similar
Dispositif de mélange et de dosage de fourrage pour bétail ou similaire

(30) Priorität: 22.03.1990 NL 9000682; 12.09.1990 NL 9002003
(43) Veröffentlichungstag der Anmeldung: 25.09.1991
(60) Teilanmeldung: 92203987.0
(73) Patentinhaber: LITECH B.V., NL-7521 PD Enschede (NL)
(72) Erfinder: Liet, Cornelis Hendricus, NL-7581 PJ Losser (NL); Liet, Fredericus, NL-7581 HD Losser (NL)
(74) Vertreter: de Vries, Johannes Hendrik Fokke

(56) Entgegenhaltungen:
- EP-A- 0 014 154
- EP-A- 0 106 713
- EP-A- 0 166 653
- EP-A- 0 415 466
- DE-A- 2 851 240
- DE-A- 3 818 272
- FR-A- 2 331 970
- US-A- 4 741 625

## Beschreibung

Die Erfindung bezieht sich auf eine Vorrichtung gemäß dem Oberbegriff des Anspruchs 1.

Eine derartige Vorrichtung ist aus der EP-A-0 166 653 bekannt. Bei dieser bekannten Vorrichtung sind die Mischelemente an ihren Enden mit endlosen Ketten verbunden, die jeweils auf zwei am Boden montierten Kettenrädern und zwei an der Oberseite der Mischkammer angeordneten Kettenräder geführt sind. Bei dieser bekannten Vorrichtung schließt die oder jede Seitenwand mit einer Abfuhröffnung einen spitzen Winkel ein mit dem Boden, sodaß ein besonders abrupter Übergang des Bodens zu der oder jeder Seitenwand entsteht, welcher Übergang von den Ketten gefolgt wird. Ein derartiger abrupter Übergang hat den Nachteil, daß das Viehfutter während des Mischens, wenn die Abfuhröffnung geschlossen ist, sich gegen die jeweilige Seitenwand aufhäuft, sodaß die Mischelemente im Viehfutter festlaufen. Außerdem ist bei dieser bekannten Vorrichtung die Abfuhröffnung nicht nur in der Seitenwand, jedoch auch in einem an die Seitenwand grenzenden Teil des Bodens angeordnet, sodaß ein dosiertes Entladen des Viehfutters nicht gut möglich ist. Außerdem ist die Klappe, womit die Öffnung in der Seitenwand absperrbar ist, drehbar um eine in dieser Seitenwand montierten Welle, welche Welle tiefer liegt als die Welle der naheliegenden Kettenräder der Ketten für den Antrieb der Mischelemente. Dies hat den Nachteil, daß bei geöffneter Klappe außerhalb der Bahn der Mischelemente vorerst ein freier Raum vorhanden ist, der anschließend stark konisch zuläuft. Dadurch verklemmt sich das Viehfutter, insbesondere kohärentes Silofutter, das während des Entladens teilweise über den Mischelementen hängen bleibt und in dieser Weise von den Mischelementen mitgenommen wird, zwischen dem oberen Ende der Seitenwand und der Oberwand und den Mischelementen, sodaß die Mischelemente festlaufen.

EP-A-0 106 713 bezieht sich auf eine Vorrichtung zum Mischen und Entladen von Viehfutter oder dergleichen, wobei die Mischelemente zwischen den Seitenwänden verlaufen und eine sich zwischen der Endwand und der Einführungsseite erstreckende Bahn durchlaufen. In der Endwand ist eine Abfuhröffnung angeordnet, wobei ein Querförderorgan an die Abfuhröffnung anschließt und das Viehfutter aus der Vorrichtung abführt.

Aufgabe der Erfindung ist es eine Vorrichtung der eingangs genannten Art zu schaffen, mit der die erwähnten Nachteile wirksam behoben werden, wobei eine relativ leichte Konstruktion genügt, die Fertigungskosten niedrig sind und ein hervorragendes Mischen und dosiertes Entladen des Viehfutters garantiert ist. Außerdem ist es Aufgabe der Erfindung eine derartige Vorrichtung zu schaffen, bei der die Mischelemente sich nicht verklemmen können und wobei zum Antrieb der Mischelemente eine relativ niedrige Leistung genügt.

Zu diesem Zweck ist die Vorrichtung der eingangs genannten Art gemäß der Erfindung gekennzeichnet durch die Merkmale des kennzeichnenden Teils des Anspruchs 1.

Hierdurch wird eine Anhäufung des Viehfutters gegen die Seitenwand vermieden und eine gute Mischung des Viehfutters garantiert. Zum Weiteren genügt eine relativ niedrige Leistung zum Antrieb der Mischelemente. Außerdem ist ein dosiertes Entladen des Viehfutters möglich, weil jedes Mischelement über die Abfuhröffnung nur einen Teil des Viehfutters das von diesem Mischelement der Wand entlang gefördert wird, abführt, während der übrige Teil in die Mischkammer zurückfällt.

Eine bevorzugte Ausführungsform der Vorrichung der eingangs genannten Art ist dadurch gekennzeichnet, daß die Bewegungsbahn des (jedes) Mischelements bei abgesperrter Abfuhröffnung entlang des dazugehörenden Absperrorgans läuft, und daß außerhalb der Bewegungsbahn des (jedes) Mischelements zur Stelle des Uebergangsteils der Bewegungsbahn, entlang der/ jeder Seitenwand mit Abfuhröffnung, zum Obertrumm der Bewegungsbahn zwischen den beiden Seitenwänden, durch das Oeffnen der Abfuhröffnung die Distanz zwischen dem Absperrorgan und der Bewegungsbahn des (jedes) Mischelements zur Stelle dieses Uebergangsteils vergrößert wird.

Auf diese Weise wird eine Verklemmung der Mischelemente bei geöffneter Abfuhröffnung wirksam verhindert, weil außerhalb der Bewegungsbahn des/jedes Mischelementes ausreichend Raum vorhanden ist zum Durchlassen des eventuell mitgezogenen Viehfutters, insbesondere kohärenten Silofutters.

Im Folgenden wird die Erfindung an Hand der Zeichnung, in der ein Ausführungsbeispiel der Vorrichtung gemäß der Erfindung sehr schematisch angedeutet ist, näher erläutert.

Figur 1 zeigt eine teilweise offene Seitenansicht einer ersten Ausführungsform der Vorrichtung gemäß der Erfindung.

Figur 2 zeigt schematisch einen Schnitt gemäß der Linie II-II in Figur 1.

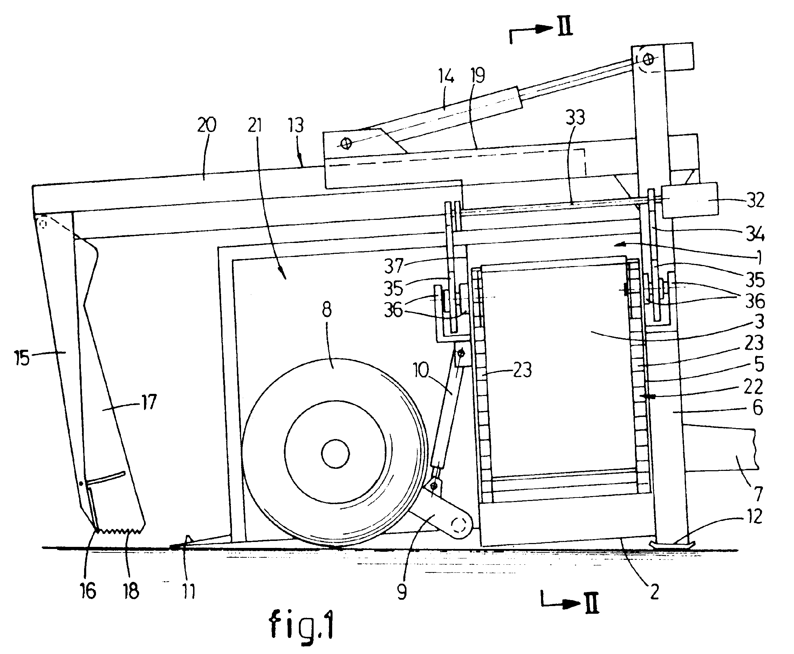

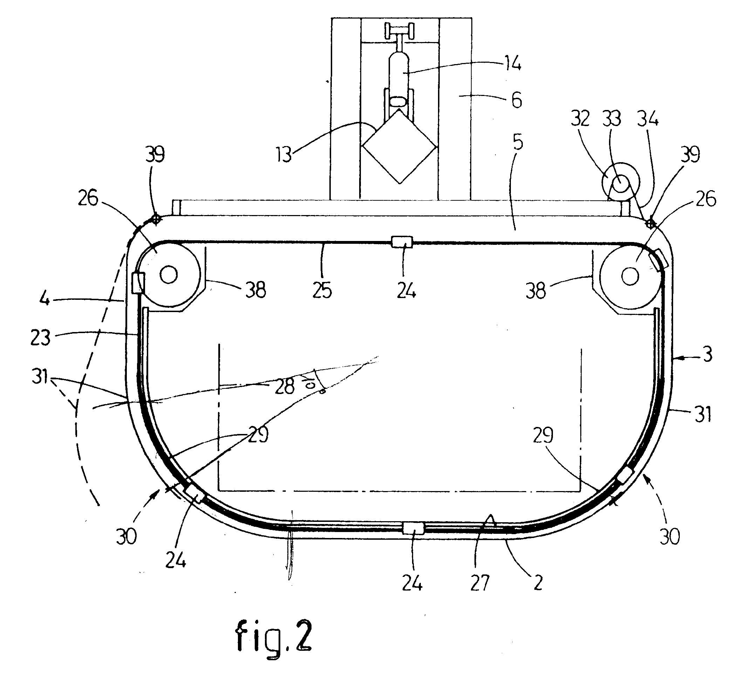

Figur 1 zeigt eine Seitenansicht einer Vorrichtung zum Mischen und dosierten Entladen von Viehfutter oder dergleichen, die eine Mischkammer 1 mit einem Boden 2, zwei in der Verstellrichtung verlaufende, einander gegenüberliegende Seitenwände 3 und 4 und eine Endwand 5 aufweist. Wie hervorgeht aus Figur 2, geht der flache Boden 2 via bogenförmige Teile mit relativ großem Radius über in die vertikalen Seitenwände 3, 4. Anstatt der bogenförmigen Teile kann der Boden 2 auch über einen oder mehrere querlaufende rechte Teile an die vertikalen Seitenwände 3, 4 anschließen. Dabei ist es vor allem wichtig daß wenigstens an der Seite einer Abfuhröffnung ein allmählicher Uebergang vom Boden 2 zu den vertikalen Seitenwänden 3, 4 realisiert wird, wie im Folgenden näher erläutert werden wird. In der Nähe der Endwand 5 ist die Mischkammer 1 an ein vertikales Gestell 6 befestigt, das eine teilweise gezeigte Zugstange 7 aufweist, mit der die Vorrichtung an eine Zugmaschine gekuppelt werden kann. Weiter umfaßt die Vorrichtung zwei Räder 8, die drehbar in dem einen Ende der Arme gelagert sind, die von Zilinder-Kolbenaggregaten 10 auf-und- niederbewegbar sind. Figur 1 zeigt nur ein Rad mit Arm und Zilinder-Kolbenaggregat, wobei das Rad 8 sich in einer zum Ausschneiden des Viehfutters aus einem nicht weiter gezeigten Vorrat günstigen Position befindet, in der ein frei ausragendes Ende 11 des Bodens 2 auf der Erde ruht. Dabei stützt das Gestell 6 außerdem mit Stützen 12 auf der Erde.

Ein Schwenkarm 13 ist drehbar gelagert im Gestell 6 und ist mittels eines Zilinder-Kolbenaggregats 14 schwenkbar. Der Schwenkarm 13 trägt an seinem vom Gestell 6 abgewandten Ende ein Schneidschild 15, das an der Unterseite ein nicht näher angedeutetes Schneidorgan 16 aufweist. Weiter ist an einer Seite oder an beiden Seiten des Schneidschildes 15 ein Seitenschneidschild 17 angeordnet, das an seiner Unterseite ebenfalls ein Schneidorgan 18 aufweist. Dieses Seitenschneidschild 17 ist bei dem illustrierten Ausführungsbeispiel an der Oberseite drehbar gelagert, sodaß es sich in eine vom Gestell 6 abgewandte Richtung drehen kann.

Im beschriebenen Ausführungsbeispiel ist der Schwenkarm 13 teleskopisch gebildet und besteht aus einem Kastenträger 19, in dem ein Kastenträger 20 mittels nicht näher angedeuteter Antriebsorgane verfahrbar ist, derart, daß das Schneidschild 15 von der illustrierten Stellung über eine der Endwand 5 gegenüber gelegenen Kammer 21 bis an die Mischkammer 1 grenzend verstellbar ist. Die Kammer 21, die bei Bedarf als Vorratskammer für ausgeschnittenes Viehfutter dienen kann, schließt an eine offene Einführungsseite der Mischkammer 1 an. Die beschriebene Vorrichtung zum Ausschneiden von Viehfutter ist näher erläutert in der niederländischen Patentanmeldung 8902190, wonach hier der Kürze halber verwiesen wird.

In der Mischkammer ist ein Mischorgan angeordnet, das als endloses Förderorgan 22 mit zwei nahezu parallel laufenden Ketten 23 ausgestattet ist, die als flexibele Förderelemente fungieren, wobei zwischen den Ketten 23 quer auf die Förderrichtung sich erstreckende Mischelemente oder Mitnehmer 24 angeordnet sind. Diese Mischelemente 24 sind auf einem relativ großen Abstand voneinander, zum Beispiel mindestens 50 cm, angeordnet.

Wie insbesondere Figur 2 zeigt, erstreckt sich der Obertrumm 25 der Ketten 23 zwischen dazugehörenden Kettenrädern 26, wobei der übrige Teil der Ketten von einem steifen Führungselement 27 auf eine geringfügige Distanz zu den Seitenwänden 3, 4 und dem Boden 2 der Mischkammer 1 geführt wird.

Wie deutlich hervorgeht aus den Figuren 1 und 2, umschließen die Ketten 23 mit den Mischelementen 24 einen offenen Mischraum, an den das zu mischende Viehfutter von der Kammer 21 her durch einziehen des Schneidschildes 15 einfach zugeführt werden kann, wobei die Ketten 23 und Mischelemente 24 gar keine Behinderung bilden.

In Figur 2 ist mit einer unterbrochenen Linie 28 das Schneidschild schematisch angedeutet, und es geht deutlich hervor, daß das Schneidschild mit den Schneidorganen 16, 18 ohne weiteres bis an den Mischraum grenzend eingefahren werden kann, sodaß kein Viehfutter in der Kammer 21 zurück bleibt und das Ganze aus dem Vorrat genommene Viehfutter in den Mischraum kommt und da gemischt wird. Das Schneidschild 15 sperrt die Mischkammer 1 über die ganze Grenzebene zwischen der Mischkammer 1 und der Kammer 21 nahezu völlig ab. Außerdem geht aus Figur 2 hervor, daß das ebene Teil des Bodens 2 kleiner ist als die Breite des Schneidschildes 15, sodaß bei einer gewissen Breite des Schneidschildes 15 die totale Breite der Vorrichtung beschränkt werden kann.

Die Führungselemente 27 sind zwischen den Teilen die sich entlang dem Boden 2 und den Seitenwänden 3, 4 erstrecken jeweils mit zwei nahezu bogenförmigen Uebergangsabschnitten 29 ausgestattet, mit einem Radius von mindestens 20 cm. In der Praxis wurden sehr gute Resultate erlangt mit einem Radius von 50-60 cm. Diese Uebergangsabschnitte 29 folgen dem bogenförmigen Uebergang des Bodens 2 in die vertikalen Seitenwände 3, 4, sodaß auch hier die Ketten 23 auf einer geringfügigen Distanz zu den Seitenwänden 3, 4 und dem Boden geführt werden. Die Mischelemente 24 durchlaufen daher eine Bewegungsbahn in der Mischkammer 1, die an den Boden 2 und an die Seitenwände grenzt, wobei der Oberteil 25 dieser Bewegungsbahn beidseitig über, bei dem beschriebenen Ausführungsbeispiel von Kettenrädern 26 bestimmte, Uebergangsabschnitte auf die Bewegungsbahn entlang den Seitenwänden 3 bzw. 4 anschließt.

In der beschriebenen Ausführungsform ist zur Stelle der Uebergangsabschnitte 29 in jeder Seitenwand 3 bzw. 4 eine Abfuhröffnung 30 angebracht, die mit einer Klappe 31 absperrbar ist. Es ist jedoch auch möglich nur eine der Seitenwände 3, 4 mit einer Abfuhröffnung mit dazugehörender Klappe zu gestalten. In diesem Fall können der Uebergang des Bodens 2 zur Seitenwand ohne Abfuhröffnung und die dazugehörenden Führungselemente 27 mit Uebergängen mit beträchtlich kleinerem Radius gebildet werden. Ein allmählicher Uebergang bleibt bevorzugt, weil dadurch eine bessere Mischfunktion erreicht wird und eine niedrigere Antriebsleistung zum Antreiben der Mischelemente 24 erfordert wird. Wie hervorgeht aus Figur 2 bildet jede Klappe 31 nahezu die ganze Seitenwand 3 bzw. 4. Jedes Klappe 31 ist derart bemessen, daß es einen Teil des bogenförmigen Uebergangs zwischen der vertikalen Seitenwand 3 bzw. 4 und dem Boden 2 umfaßt. In einer praktischen Ausführungsform umfaßt jede Klappe 31 vorzugsweise einen Bogensektor von ungefähr 30° des Uebergangsteiles. Die Größe des Bogensektors jeder Klappe 31 bestimmt zusammen mit der Geschwindigkeit, mit der die Ketten 23 angetrieben werden, die Entladegeschwindingkeit der Vorrichtung. Während des Mischens des Viehfutters im Mischraum sind beide Klappen 31 geschlossen. Dabei befindet sich das Schneidschild 15 in eingefahrener Stellung, wobei das Schneidschild 15 sich annähernd in der Grenzebene oder in der von der Endwand 5 abgewandten Eingangsebene, zwischen der Mischkammer 1 und der Kammer 21 befindet und die Mischkammer 1 über diese ganze Eingangsebene abschließt. Zum dosierten Entladen des gemischten Viehfutters wird wahlweise eine der Klappen 31 geöffnet, wobei durch eine übereinstimmende Wahl der Förderrichtung der Ketten 23 das Viehfutter linksherum oder rechtsherum, über die geöffnete Abfuhröffnung 30 der Seitenwand 3 bzw. 4, entladen wird.

Die Klappen 31 sind jeweils mittels einer Welle 39 drehbar in der Vorrichtung montiert, welche Welle 39 auf kurzem Abstand oberhalb der Zahnräder 26 angeordnet ist. Wenn die Klappe 31 in die mit einer Strichellinie angedeutete offene Stellung gebracht wird, entsteht dadurch an der Außenseite der Uebergangsteile der Bewegungsbahn der Mischelemente 24 bei den Kettenrädern 26 genügend freier Raum um zu verhindern, daß während des Entladens des Viehfutters über die Abfuhröffnung 30 eventuell von den Mischelementen mitgezogenes Viehfutter, insbesondere kohärentes Silofutter, sich hier verklemmt zwischen der Klappe 31 einerseits und den Mischelementen 24 und dem Kettenrad 26 andererseits. Außerdem ist bei der beschriebenen Ausführung auch bei verschlossenen Abfuhröffungen 30 oberhalb dieser Uebergangsteile der Bewegungsbahn der Mischelemente 24 bei den Kettenrädern 26 genügend freier Raum vorhanden, sodaß an den Wendepunkten für die Mischelemente Viehfutter, das eventuell an einem Mischelement hängen bleibt, einfach dem Uebergang zum Obertrumm 25 folgen kann und das Viehfutter sich hier nicht verklemmt, wodurch sonst die Mischelemente 24 festlaufen könnten oder die Wand der Mischkammer 1 verformt werden könnte. Obwohl bei der in der Zeichnung illustrierten Ausführungsform die Klappen 31 parallel zu den betreffenden Teilen der Bewegungsbahn der Mischelemente 24 laufen, ist es auch möglich die Vorrichtung so zu gestalten, daß bei geschlossener Abfuhröffnung 30 die Distanz zwischen der Klappe 31 und der Bewegungsbahn der Mischelemente 24 an der Oberseite der Klappe größer ist als an der Unterseite der Klappe 31. Der Durchgang des von den Mischelementen 24 mitgezogenen Viehfutters kann dadurch verbessert werden.

Wegen des relativ großen Radiusses der Uebergangsteile 29 und wegen des bogenförmigen Uebergangs des Bodens 2 in die vertikalen Wände 3, 4, wird ein allmählicher Uebergang des waagerechten Bodenteils der Ketten 23 zu den nahezu vertikalen Teilen der Ketten 23 erhalten. Dadurch wird einerseits eine hervorragende Mischfunktion gewährleistet, weil ein intensives umwühlen des Viehfutters erreicht wird, während andererseits ein Festlaufen der Ketten 23 und der Mischelemente 24 wirksam vermieden wird. Die erforderte Antriebsleistung ist wegen der beschriebenen Führung der Ketten 23 und der Mischelemente 24 relativ niedrig. Bei einem abrupten Uebergang des Bodens 2 in die vertikalen Seitenwände 3, 4 würden die Mischelemente 24 das Viehfutter gegen die Seitenwand 3 bzw. 4 drücken und würden die Mischelemente 24 und die Ketten 23 in dem sich an der Seitenwand 3 bzw. 4 anhäufenden Viehfutter festlaufen. Außerdem bewirkt der beschriebene allmähliche Uebergang des Bodens 2 in die Seitenwände 3, 4, daß das Viehfutter bei geöffneter Klappe 31 dosiert entladen wird. Wie oben schon bemerkt wurde, wird ein optimales Resultat erlangt, wenn jede Klappe 31 einen Bogensektor von ungefähr 30° des Uebergangsteils umfaßt sodaß der Boden 2 dann bei jeder Abfuhröffnung 30 einen Bogensektor von ungefähr 60° aufweist. Dadurch wird erreicht, daß jedes Mischelement 24 nur einen Teil des von diesem Mischelement entlang dem Boden 2 geförderten Viehfutters über die Abfuhröffnung entladen kann, wobei der übrige Teil zurückfällt in die Mischkammer 1. Je nachdem die Länge des Bogensektors des Bodens 2, oder mehr im Allgemeinen der Neigungswinkel des Bodens 2 an der Endkante bei der Abfuhröffnung 30 zunimmt, wird weniger Viehfutter abgegeben und fällt mehr Viehfutter in die Mischkammer zurück. Dadurch, daß die bogenförmigen Uebergänge zwischen dem Boden 2 und den Seitenwänden 3, 4 zum Teil eine Fortsetzung des Bodens 2 und zum Teil ein Teil der klappen 31 bilden, wird ebenfalls erreicht, daß bei einer beschränkten Breite der Vorrichtung das Viehfutter über die Abfuhröffnung 30 zum Futterplatz des Viehs entladen werden kann.

Figur 1 zeigt einen Antriebsmotor 32 der über eine Welle 33 und Ketten 34 Kettenräder 35 antreibt, welche Kettenräder 35 beiderseits des Mischraums auf derselben Welle befestigt sind wie das an der betreffenden Seite gelegene Kettenrad 26. Auf diese Weise wird ein einfacher Antrieb der Ketten 23 erlangt, wobei ein relativ langsamer Antrieb der Ketten 23 erhalten wird ohne Verwendung teurer Verzögerungsorgane.

Die Wellen der Kettenräder 26 und 35 sind in zwei Stützen 36 außerhalb des Mischraums gelagert. Dadurch wird erreicht, daß sich im Mischraum, zwischen den gegenüber einander liegenden Kettenrädern, keine Wellen erstrecken, sodaß das Viehfutter nicht an derartigen Wellen festlaufen kann.

Da die Breite der Kammer 21 nur wenig größer ist als die Breite des Schneidschildes 15, befindet sich im Bereich des Uebergangs der Kammer 21 zum Mischraum 1 eine Querwand 37. An dieser Querwand 37 ist das Führungselement 27 befestigt für die an dieser Seite des Mischraums angeordnete Kette 23. Das andere Führungselement 27 für die andere Kette 23 ist an der Endwand 5 befestigt. Die Führungselemente 27 können z.B. einen Kunststoffstreifen umfassen, der an einem Metallträger befestigt ist.

Bei jedem Kettenrad 26 ist ein Abschirmungsstreifen 38 angeordnet, der das Viehfutter möglichst weit von den Kettenrädern 26 entfernt hält.

Die beschriebene Vorrichtung hat den Vorteil, daß ein völlig offener Mischraum vorhanden ist, in den das Viehfutter von der offenen Einführungsseite her ohne Behinderungen zugeführt werden kann. Da die Ketten 23 ganz nahe entlang dem Boden 2 und den Seitenwänden 3, 4 geführt werden, wird eine Förderbewegung des zu mischenden Viehfutters entlang dem Umkreis dieses Mischraums erhalten, wobei das Viehfutter sozusagen umgewühlt wird, insbesondere im Bereich der Uebergangsabschnitte 29. Dabei wird ein Sich-Ineinanderdrehen des Viehfutters zu einem harten Ballen vermieden, sodaß das Viehfutter eine lockere Masse bleibt und das Festlaufen der Mischelemente vermieden wird. Das Teilen der Vorrichtung in eine Mischkammer 1 und eine davon abgesonderte Kammer 21 hat außerdem den Vorteil, daß das in der Vorrichtung anwesende Viehfutter in Teilen gemischt werden kann, sodaß die für den Antrieb der Mischelemente erforderliche Leistung vergleichsweise niedrig ist. Es ist jedoch sicherlich möglich die Vorrichtung ohne Kammer 21 zu gestalten, wobei der Mischkammer 1 nur ein kurzer Raum vorabgeht, in den das Schneidschild 15 nahezu passend eingefahren werden kann.

Die beschriebene Vorrichtung hat außerdem den wichtigen Vorteil, daß die Mischelemente 24 bei geöffneter Abfuhröffnung 30 außerdem als Entladeelemente wirksam sind und das Viehfutter aus der Abfuhröffnung 30 entladen. Dadurch wird kein zusätzliches Abfuhrorgan benötigt.

Außerdem wird durch die gewählte Konstruktion erreicht, daß die Führungselemente 27 während des Mischens nicht schwer belastet werden, weil das Viehfutter die Ketten 23 und die Mischelemente 24 in einer von den Führungselementen 27 abgewandten Richtung belastet.

Obwohl bei der beschriebenen Ausführungsform die Mischelemente 24 von dem endlosen Förderorgan 22 verstellt werden, ist es auch möglich die Mischelemente auf andere Weise entlang dem Umkreis des Mischraumes zu verstellen. Es könnte z.B. auf der Endwand 5 eine entlang dem Umkreis des Mischraumes laufende Führungsbahn angeordnet werden, in der die Mischelemente 24 verstellbar sind.

Die beschriebene Vorrichtung kann auch auf andere Weise als mit Rädern verstellbar sein, z.B. durch Befestigung an die Dreipunktaufhängung einer Zugmaschine. Bei Bedarf kann die Vorrichtung eine stationär aufgestellte Einheit bilden, an die das Viehfutter mit Hilfe anderer Mittel zugeführt wird.

Obwohl bei den beschriebenen Ausführungsformen ein Schneidschild 15 mit angetriebenem Schneidorgan 16 verwendet wird, könnte auch ein andersartig gestaltetes Schneidschild verwendet werden, das an der Unterseite z.B. als Schneidorgan funktionierende feste Zähne aufweist.

## Patentansprüche

1. Vorrichtung zum Mischen und dosierten Entladen von Viehfutter oder dergleichen, die eine Mischkammer (1) mit einem Boden (2), zwei einander gegenüberliegende Seitenwände (3, 4) und eine quer zu den Seitenwänden verlaufende Endwand (5), mindestens ein antreibbares in der Mischkammer montiertes Mischelement (24), das sich ungefähr parallel zu den Seitenwänden erstreckt und während des Betriebes eine nahezu geschlossene, teilweise zwischen und teilweise parallel zu den Seitenwänden verlaufende Bahn in der Mischkammer durchläuft, aufweist, wobei in mindestens einer Seitenwand eine von einem Absperrorgan (31) absperrbare Abfuhröffnung (30) zum Entladen von Viehfutter vorgesehen ist, wobei die Bewegungsbahn von dem (jedem) Mischelement an den Boden und die Seitenwände grenzt und entlang der Abfuhröffnung in der (jeder) Seitenwand läuft und das (jedes) Mischelement bei geöffneter Abfuhröffnung als Entladeelement das Viehfutter aus der Abfuhröffnung abführt, und wobei die Mischkammer gegenüber der Endwand eine offene Einführungsseite zum Einführen des Viehfutters oder dergleichen aufweist, wobei Mittel (13, 15) zur Zufuhr des Viehfutters zur Mischkammer von der Einführungsseite her in die Richtung der Endwand vorgesehen sind, **dadurch gekennzeichnet,** daß der Boden (2) und wenigstens die eine Abfuhröffnung aufweisende Seitenwand (3, 4) über einen **bogenförmig verlaufenden** Übergangsteil an einander anschließen, daß die Bewegungsbahn des (jedes) Mischelements (24) diesem Übergangsteil folgt, und daß die Abfuhröffnung in der (jeder) Seitenwand bzw. das (jedes) Absperrorgan (31) an den mit dem Boden verbundenen Übergangsteil anschließt, wobei der **mit dem Boden verbundene Übergangsteil entlang einem Kreisbogen gemessen einen Bogensektor von kleiner als 90° überbrückt.**

2. Vorrichtung nach Anspruch 1, **dadurch** **gekennzeichnet,** daß die Bewegungsbahn des (jedes) Mischelements (24) bei abgesperrter Abfuhröffnung (30) entlang des dazugehörenden Absperrorgans (31) läuft und daß außerhalb der Bewegungsbahn des (jedes) Mischelements zur Stelle des Übergangsteils der Bewegungsbahn entlang der/jeder Seitenwand mit Abfuhröffnung zum Obertrumm (25) der Bewegungsbahn zwischen den beiden Seitenwänden (3, 4) durch das Öffnen der Abfuhröffnung (30) die Distanz zwischen dem Absperrorgan und der Bewegungsbahn des (jedes) Mischelements zur Stelle dieses Übergangsteils vergrößert wird.

3. Vorrichtung nach Anspruch 2, **dadurch gekenn****zeichnet,** daß bei abgesperrter Abfuhröffnung (30) die Distanz zwischen dem Absperrorgan (31) und der Bewegungsbahn des (jedes) Mischelements (24) an der Oberseite des Absperrorgans größer ist als an der Unterseite des Absperrorgans.

4. Vorrichtung nach Anspruch 2 oder 3, **dadurch** **gekennzeichnet,** daß zumindest über dem (jedem) Übergangsteil der Bewegungsbahn des (jedes) Mischelements (24) bei verschlossener Abfuhröffnung (30) ein freier Raum vorhanden ist.

5. Vorrichtung nach Anspruch 2, 3 oder 4, **dadurch** **gekennzeichnet,** daß die (jede) Abfuhröffnung (30) mittels einer drehbar um eine Welle (39) montierten Klappe (31) absperrbar ist, welche Welle (39) in oder über der waagerechten Ebene durch den Anfangspunkt des Übergangsteils der Bewegungsbahn des (jedes) Mischelements (24) bei der betreffenden Seitenwand (3, 4) angeordnet ist.

## Claims

1. Device for mixing and proportioned discharge of animal fodder or the like, having a mixing chamber (1) with a base (2), two side walls (3, 4) lying opposite one another and an end wall (5) extending at right angles to the side walls, at least one drivable mixing element (24) which is mounted in the mixing chamber, extends approximately parallel to the side walls and during operation travels a path extending partially between and partially parallel to the side walls in the mixing chamber, wherein a discharge opening (30) which can be closed by a shut-off device (31) is provided in at least one side wall for discharging animal fodder, wherein the path of movement of the (each) mixing element borders on the base and the side walls and runs along the discharge opening in the (each) side wall and when the discharge opening is opened the (each) mixing element acts as a discharge element to discharge the animal fodder out of the discharge opening, and wherein the mixing chamber has an open intake side opposite the end wall for intake of the animal fodder or the like, wherein means (13, 15) are provided for the supply of animal fodder to the mixing chamber from the intake side in the direction of the end wall, characterised in that the base (2) and at least the side wall (3, 4) having a discharge opening adjoin one another by a curved transition part, that the path of movement of the (each) mixing element (24) follows this transition part, and that the discharge opening in the (each) side wall or the (each) shut-off device (31) adjoins the transition part connected to the base, and the transition part connected to the base when measured along an arc of a circle bridges a sector of an arc of less than 90°.

2. Device according to Claim 1, characterised in that when the discharge opening (30) is closed the path of movement of the (each) mixing element at the location of the transition part of the path of movement along the/each side wall with a discharge opening to the upper section (25) of the path of movement between the two side walls (3, 4) by opening the discharge opening (30) the distance between the shut-off device and the path of movement of the (each) mixing element is increased at the location of this transition part.

3. Device according to Claim 2, characterised in that when the discharge opening (30) is closed the distance between the shut-off device (31) and the path of movement of the (each) mixing element is greater on the upper face of the shut-off device than on the underside of the shut-off device.

4. Device according to Claim 2 or 3, characterised in that when the discharge opening (30) is closed there is a free space at least over the (each) transition part of the path of movement of the (each) mixing element (24).

5. Device according to Claim 2, 3 or 4, characterised in that the (each) discharge opening **(**30) can be closed by means of a flap (31) mounted so as to be rotatable about a shaft (39), the said shaft (39) being arranged in or over the horizontal plane through the starting point of the transition part of the path of movement of the (each) mixing element (24) in the case of the relevant side wall (3, 4).

## Revendications

1. Dispositif permettant de mélanger et de décharger de manière dosée du fourrage ou similaire, comportant une chambre de malaxage (1) avec un fond (2), deux parois latérales (3, 4) opposées l'une à l'autre et une paroi terminale (5) s'étendant transversalement aux parois latérales, au moins un élément de malaxage (24) à entraîner, monté dans la chambre de malaxage, qui s'étend à peu près parallèlement aux parois latérales et qui, pendant le fonctionnement, traverse, dans la chambre de malaxage, une voie presque fermée, s'étendant en partie entre les parois latérales et en partie parallèlement à celles-ci, une ouverture d'évacuation (30), qui peut être fermée par un organe de fermeture (31), étant prévue dans au moins une paroi latérale pour décharger le fourrage, la voie de déplacement du (de chaque) élément de malaxage étant adjacente au fond et aux parois latérales et s'étendant le long de l'ouverture d'évacuation dans la (chaque) paroi latérale et le (chaque) élément de malaxage évacuant le fourrage par l'ouverture d'évacuation ouverte, en tant qu'élément de déchargement, et la chambre de malaxage comportant par rapport à la paroi terminale un côté d'introduction ouvert pour introduire le fourrage ou similaire, des moyens (13, 15) étant prévus pour l'arrivée du fourrage jusqu'à la chambre de malaxage, à partir du côté d'introduction, dans la direction de la paroi terminale, caractérisé en ce que le fond (2) et au moins une paroi latérale (3, 4), comportant une ouverture d'évacuation, se raccordent l'un l'autre par un élément de transition en arc, en ce que la voie de déplacement du (de chaque) élément de malaxage (24) fait suite à cet élément de transition et en ce que l'ouverture d'évacuation se raccorde dans la (chaque) paroi latérale ou dans le (chaque) organe de fermeture (31), à l'élément de transition assemblé au fond, l'élément de transition assemblé au fond s'étendant sur un secteur d'arc inférieur à 90°, mesuré le long d'un arc de cercle.

2. Dispositif selon la revendication 1, caractérisé en ce que la voie de déplacement du (de chaque) élément de malaxage (24) s'étend, lorsque l'ouverture d'évacuation (30) est fermée, le long de l'organe d'évacuation (31) correspondant et en ce qu'à l'extérieur de la voie de déplacement du (de chaque) élément de malaxage à l'emplacement de l'élément de transition de la voie de déplacement le long de la/chaque paroi latérale avec ouverture d'évacuation vers le brin supérieur (25) de la voie de déplacement, entre les deux parois latérales (3, 4), du fait de l'ouverture d'évacuation (30), la distance est augmentée entre l'organe de fermeture et la voie de déplacement du (de chaque) élément de malaxage, au droit de cet élément de transition.

3. Dispositif selon la revendication 2, caractérisé en ce que lorsque l'ouverture d'évacuation (30) est fermée, la distance entre l'organe de fermeture (31) et la voie de déplacement du (de chaque) élément de malaxage (24) est plus grande sur le côté supérieur de l'organe de fermeture que sur le côté inférieur de celui-ci.

4. Dispositif selon la revendication 2 ou 3, caractérisé en ce que lorsque l'ouverture d'évacuation (30) est fermée, il existe un volume libre au moins au-dessus du (de chaque) élément de transition de la voie de déplacement du (de chaque) élément de malaxage (24).

5. Dispositif selon la revendication 2, 3 ou 4, caractérisé en ce que la (chaque) ouverture d'évacuation (30) peut être fermée au moyen d'un clapet (31) monté tournant autour d'un arbre (39), lequel arbre (39) est placé dans ou au-dessus du plan horizontal passant par le point initial de l'élément de transition de la voie de déplacement du (de chaque) élément de malaxage (24), pour la paroi latérale (3, 4) concernée.
